# EUROPEAN PATENT SPECIFICATION

(11) **EP 3 990 176 B1**
(45) Date of publication and mention of the grant of the patent: **06.11.2024**
(21) Application number: 20733087.9
(22) Date of filing: 20.05.2020
(51) Int. Cl.: B01J 31/18, B01J 31/40

(54) **PROCESS TO PREPARE SOLUTION FROM HYDROFORMYLATION PROCESS FOR PRECIOUS METAL RECOVERY**
VERFAHREN ZUR HERSTELLUNG EINER LÖSUNG AUS HYDROFORMYLIERUNGSPROZESS ZUR RÜCKGEWINNUNG VON EDELMETALLEN
PROCESSUS DE PRÉPARATION D'UNE SOLUTION À PARTIR D'UN PROCESSUS D'HYDROFORMYLATION POUR LA RÉCUPÉRATION DE MÉTAUX PRÉCIEUX

(30) Priority: 27.06.2019 US 201962867575 P
(43) Date of publication of application: 04.05.2022
(73) Proprietor: Dow Technology Investments LLC, Midland, MI 48674 (US)
(72) Inventor: BECKER, Michael C., Hewitt, Texas 76643 (US); EISENSCHMID, Thomas C., Cross Lanes, West Virginia 25313 (US); MILLER, Glenn A., Charleston, West Virginia 25303 (US)
(74) Representative: Boult Wade Tennant LLP
(86) International application number: PCT/US2020/033762
(87) International publication number: WO 2020/263462

(56) References cited:
- US-A- 4 774 361
- US-A1- 2003 175 188
- US-B1- 6 455 740

## Description

### FIELD

The present invention relates generally to processes to facilitate the recovery of precious metals from solutions from hydroformylation processes that comprise hydroformylation reaction catalysts.

### BACKGROUND

Hydroformylation processes, and conditions for their operation, are well known. A hydroformylation process may be asymmetric or non-asymmetric, with the preferred process being non-asymmetric, may be conducted in any batch, continuous or semi-continuous fashion, and may involve any catalyst liquid and/or gas recycle operation desired.

It is well known that the useful catalyst life for hydroformylation catalysts are limited by a number of factors including the accumulation of catalyst poisons such as sulfur and halides typically from feeds, buildup of heavies (typically aldehyde condensation products), metal colloid or cluster formation, and the like. For hydrolyzable ligands such as described herein, buildup of ligand fragments and ligand oxides can also limit catalyst life in the same manner as aldehyde heavies by occupying valuable reactor volume without contributing to production. In addition, such materials may reach such levels to exceed their solubility limit and form solid precipitates within the process equipment. The use of additives (e.g., as described in JP2000095722, JP20000351746, US 4,774,361, US 5,756,855), acid mitigators (e.g., as described in US Patent Publication No. 2008/0188686), or extractors and water addition to mitigate the ligand degradation and buildup of insolubles (e.g., as described in PCT Publication No. WO2012/064586) may prolong catalyst life. However, at some point, the above approaches may not be sufficient to maintain commercially viable catalyst activity.

Mixtures of hydrolyzable and non-hydrolyzable ligands have been used in hydroformylation reaction processes as described, for example, in CN106431869, CN1986055 , RU2352552, RU2584952, RU2562971, US 5741,945, and WO2017010618, but such references make no mention of the impact of non-hydrolyable ligands on the recovery of precious metals from a spent catalyst fluid.

The conventional process to prolong or recover catalyst life is to remove a purge stream of the catalyst to send to a precious metal recovery process to regenerate the active metal catalyst precursor. Alternatively, a large portion of, or the entire catalyst solution (optionally concentrated in a vaporizer or with a membrane or nanofiltration operation to recover product aldehyde), is discharged and sent to a precious metal recovery process. Examples of these processes are disclosed in US 3,755,393, US4,388,279, US 4,929,767, US5,208,194, U.S. 5,237,106, and RU2561171.

Some processes that attempt to recover the precious metal and recycle the metal in a form suitable for use in a hydroformylation process are described in JP2001114794A, US 5,290,743, US 5,773,665, US,5936,130, US 5,648,554, and US 9,035,080. In most cases, the hydroformylation facility discharges the catalyst solution or accumulates the spent catalyst fluid into a storage or shipping container which is then shipped to the precious metal recovery facility.

It has been observed, however, that during the discharge, storage, and/or shipping process, a substantial amount of the rhodium species appear to precipitate from solution, complicating the precious metal recovery process. Determining the initial precious metal content is difficult with a heterogeneous mixture and insuring all of the material is removed from the shipping container is critical. Having a "heal" of precious metal is not acceptable so it is important to insure the contents remain in solution. The exact cause of this precipitation is not known.

There is a need to enable long term storage and shipment of spent catalyst fluid without the formation of precious metal precipitates in a manner suitable for the precious metal recovery process. In the context of hydroformylation reaction processes, there is a need to enable long term storage and shipment of spent catalyst fluid from such processes without the formation of precious metal precipitates in a manner suitable for the recovery of Group 8 metals in a precious metal recovery process.

US 4 774 361 A relates to transition metal complex catalyzed reactions.

### SUMMARY

Embodiments of the present invention advantageously provide processes to prepare catalyst solutions from a hydroformylation reaction process for a precious metal recovery process. Such processes advantageously minimize or eliminate the formation of precipitates incorporating the precious metal, thus insuring that the precious metal complexes remain in solution during storage and shipment to a precious metal recovery process facility.

The invention relates to a process in accordance with appended claim 1.

These and other embodiments are described further in the Detailed Description.

### DETAILED DESCRIPTION

All references to the Periodic Table of the Elements and the various groups therein are to the version published in the CRC Handbook of Chemistry and Physics, 72nd Ed. (1991-1992) CRC Press, at page 1-11.

Unless stated to the contrary, or implicit from the context, all parts and percentages are based on weight and all test methods are current as of the filing date of this application.

As used herein, "a," "an," "the," "at least one," and "one or more" are used interchangeably. The terms "comprises," "includes," and variations thereof do not have a limiting meaning where these terms appear in the description and claims. Thus, for example, an aqueous composition that includes particles of "a" hydrophobic polymer can be interpreted to mean that the composition includes particles of "one or more" hydrophobic polymers.

As used herein, the term "ppmw" means parts per million by weight.

For purposes of this invention, the term "hydrocarbon" is contemplated to include all permissible compounds having at least one hydrogen and one carbon atom. Such permissible compounds may also have one or more heteroatoms. In a broad aspect, the permissible hydrocarbons include acyclic (with or without heteroatoms) and cyclic, branched and unbranched, carbocyclic and heterocyclic, aromatic and nonaromatic organic compounds that can be substituted or unsubstituted.

As used herein, the term "substituted" is contemplated to include all permissible substituents of organic compounds unless otherwise indicated. In a broad aspect, the permissible substituents include acyclic and cyclic, branched and unbranched, carbocyclic and heterocyclic, aromatic and nonaromatic substituents of organic compounds. Illustrative substituents include, for example, alkyl, alkyloxy, aryl, aryloxy, hydroxyalkyl, aminoalkyl, in which the number of carbons can range from 1 to 20 or more, preferably from 1 to 12, as well as hydroxy, halo, and amino. The permissible substituents can be one or more and the same or different for appropriate organic compounds. This invention is not intended to be limited in any manner by the permissible substituents of organic compounds.

As used herein, the term "hydroformylation" is contemplated to include, but not limited to, all permissible asymmetric and non-asymmetric hydroformylation processes that involve converting one or more substituted or unsubstituted olefinic compounds or a reaction mixture comprising one or more substituted or unsubstituted olefinic compounds to one or more substituted or unsubstituted aldehydes or a reaction mixture comprising one or more substituted or unsubstituted aldehydes.

The terms "reaction fluid", "reaction medium", "catalyst fluid" and "catalyst solution" are used interchangeably herein, and may include, but are not limited to, a mixture comprising: (a) a metal-organophosphorous ligand complex catalyst, (b) free organophosphorous ligand, (c) aldehyde product formed in the reaction, (d) unreacted reactants, (e) a solvent for said metal-organophosphorous ligand complex catalyst and said free organophosphorous ligand, and, optionally, (f) one or more phosphorus acidic compounds formed in the reaction (which may be homogeneous or heterogeneous). The reaction fluid can encompass, but is not limited to, (a) a fluid in a reaction zone, (b) a fluid stream on its way to a separation zone, (c) a fluid in a separation zone, (d) a recycle stream, (e) a fluid withdrawn from a reaction zone or separation zone, (f) a withdrawn fluid being treated with an aqueous buffer solution, (g) a treated fluid returned to a reaction zone or separation zone, (h) a fluid in an external cooler, and (i) ligand decomposition products and their salts.

"Hydrolyzable phosphorous ligands" are trivalent phosphorous P^{(III)} ligands that contain at least one P-Z bond wherein Z is oxygen, nitrogen, chlorine, fluorine or bromine. Examples include, but are not limited to, phosphites, phosphino-phosphites, bisphosphites, phosphonites, bisphosphonites, phosphinites, phosphoramidites, phosphino-phosphoramidites, bisphosphoramidites, fluorophosphites, and the like. The ligands may include chelate structures and/or may contain multiple P-Z moieties such as polyphosphites, polyphosphoramidites, etc. and mixed P-Z moieties such as phosphite-phosphoramidites, fluorophosphite-phosphites, and the like.

"Non-hydrolyzable phosphorous ligands" are triorganophosphorous P^{(III)} ligands that do not include a P-H or a P-Z bond wherein Z is oxygen, nitrogen, chlorine, fluorine or bromine. Nonlimiting examples of non-hydrolyzable phosphorous ligands are trialkylphosphines or triarylphosphines such as triphenylphosphine.

The term "complex" as used herein means a coordination compound formed by the union of one or more electronically rich molecules or atoms (i.e., ligand) with one or more electronically poor molecules or atoms (i.e., transition metal). For example, the organophosphorous ligand employable herein possesses one phosphorus (III) donor atom having one unshared pair of electrons, which is capable of forming a coordinate covalent bond with the metal. A polyorganophosphorous ligand employable herein possesses two or more phosphorus (III) donor atoms, each having one unshared pair of electrons, each of which is capable of forming a coordinate covalent bond independently or possibly in concert (for example, via chelation) with the transition metal. Carbon monoxide can also be present and complexed with the transition metal. The ultimate composition of the complex catalyst may also contain an additional ligand(s) such as described above, for example, hydrogen, mono-olefin, or an anion satisfying the coordination sites or nuclear charge of the metal.

The number of available coordination sites on a Group 8 transition metal is well known in the art and depends upon the particular transition metal selected. The catalytic species may comprise a complex catalyst mixture of monomeric, dimeric or higher nuclearity forms, which forms preferably are characterized by at least one organophosphorus-containing molecule complexed per one molecule of metal, for example, rhodium. For instance, it is considered that the catalytic species of the preferred catalyst employed in the hydroformylation reaction may be complexed with carbon monoxide and hydrogen in addition to one or more organophosphorous ligand(s). In the case of spent catalyst, there may be a large variety of metal complexes which may or may not be catalytically active and may include colloidal or clustered forms which may or may not have organophosphorous ligands present. Irregardless, all forms of the precious metal should be kept in solution (or at least suspended) for effective precious metal recovery.

For the purposes of this invention, the term "spent catalyst" refers to a catalyst that has degraded or become sufficiently contaminated as to not be economically feasible to use and needs to be replaced. In some embodiments, a spent catalyst is a catalyst having an activity that is less than 75% of its initial activity (reaction rate). In some embodiments, a spent catalyst has an activity that is less than 50% of its initial activity (reaction rate). In a purge operation, a portion of the catalyst is removed to allow for fresh catalyst to be added to the remaining catalyst which continues to operate but the purged stream is considered "spent catalyst" since it is not returned to the reactor. As used herein, "spent catalyst fluid" refers to a fluid from a hydroformylation reaction process that includes spent catalyst and may also include, but is not limited to, a mixture comprising: (a) a metal-organophosphorous ligand complex catalyst, (b) free organophosphorous ligand, (c) aldehyde product formed in the reaction, (d) unreacted reactants, (e) a solvent for said metal-organophosphorous ligand complex catalyst and said free organophosphorous ligand, and, optionally, (f) one or more phosphorus acidic compounds formed in the reaction (which may be homogeneous or heterogeneous). Additional contaminants may include aldehyde degradation products (e.g., carboxylic acids or alcohols), process fluids, water, line flushes, and the like.

As used herein, a "precious metal recovery process" means a process in which a precious metal complex is destroyed to regenerate a precious metal catalyst precursor. In these processes, at at least one point all of the original organophosphorous ligand has been removed or destroyed (e.g., oxidized) typically either by chemical oxidation (e.g., air or peroxides) or by combustion ("ashed" or "roasted"). In the context of hydroformylation reaction processes, the precious metal is typically a Group 8 transition metal such as rhodium. In a precious metal recovery process, the resulting precious metal is then converted to other forms which are suitable catalyst precursors such as, in the case of the recovery of rhodium, rhodium halides, Rh₂O₃, Rh₄(CO)₁₂, Rh₆(CO)₁₆, Rh(NO₃)₃, rhodium dicarbonyl acetoacetonate, and the like. Examples of such precious metal recovery processes include those described in US Patent No. 4,021,463, CN102925713B, and CN102373335. As used herein, "a precious metal recovery facility" is a facility that practices a precious metal recovery process. The location of the precious metal recovery facility can be at or near a hydroformylation reaction system but typically is at a separate location which specializes in precious metal recovery from a number of different types of facilities, locations, and companies. In most cases, the hydroformylation facility discharges the catalyst solution or accumulates the spent catalyst fluid into a storage or shipping container which is then shipped to the precious metal recovery facility.Turning now to embodiments of the present invention, the disclosed process relates to facilitating the recovery of precious metals from catalyst solutions from hydroformylation reaction processes. The catalysts used in such hydroformylation reactions include a Group 8 transition metial and a hydrolyzable organophosphorous ligand. As discussed above, over time, a need arises to recover the precious metal (i.e., the Group 8 transition metal) from catalyst-containing fluids within the hydroformylation reaction process. In general, the disclosed process comprises adding a non-hydrolyzable triorganophosphorous compound to a spent catalyst fluid from an active hydroformylation reaction system, wherein the spent calalyst solution is substantially free of non-hydrolyable triorganophosphorous compounds, the addition is done prior to storage and/or shipment to a precious metal recovery operation. For the purposes of this invention, when the spent catalyst fluid is removed from the hydroformylation reaction system and a non-hydrolyzable triorganophosphorous compound is added for shipment to a precious metal recovery operation, the resulting fluid is not returned to the hydroformylation system to hydroformylate olefin. Of course, once the catalytic metal is recovered by means of the precious metal recovery operation, the catalytic metal precursor may be recycled to the hydroformylation system such as a freshly prepared catalyst solution with new ligand and solvent.

In one aspect, the present invention relates to a process to prepare a spent catalyst fluid comprising a hydroformylation reaction catalyst comprising a Group 8 transition metal and a hydrolyzable organophosphorous ligand for precious metal recovery of the Group 8 transition metal, wherein the process minimizes or eliminates the formation of precipitates incorporating a precious metal, the process comprising (a) removing a spent catalyst fluid from an active hydroformylation reaction system, wherein the spent catalyst fluid comprises the hydroformylation reaction catalyst and is substantially free of non-hydrolyzable triorganophosphorous compounds; and (b) adding a non-hydrolyzable triorganophosphorous compound to the spent catalyst fluid from step (a) prior to storing the fluid or prior to shipping for precious metal recovery.

As used herein, when the spent catalyst fluid is referred to as being "substantially free of non-hydrolyzable triorganophosphorous compounds", it means that non-hydrolyzable triorganophosphorous compounds (e.g., triarylphosphines and others as discussed herein) are not used as ligands for the Group 8 transition metal to form the hydroformylation catalyst and to the extent any such non-hydrolyzable organophosphorous compounds are present in the spent catalyst fluid, such compounds are present in an amount of less than 0.1 moles of non-hydrolyzable triorganophosphorous compound per mole of Group 8 transition metal. ³¹P NMR is used to detect and determine the amount of non-hydrolyzable triorganophosphorous P^{(III)} compound present in a spent catalyst fluid since the chemical shifts of these materials are generally substantially distinct from those of hydrolyzable triorganophosphorous P^{(III)} compounds.

The non-hydrolyzable triorganophosphorous compound is added to the spent catalyst fluid prior to the spent catalyst fluid being concentrated to recover aldehyde product. This may act to prevent the precious metal from precipitating or "plating out" during the concentration process.

In some embodiments, the concentration process may involve a separate system, or in some embodiments, the product-catalyst separation processing equipment in the hydroformylation system may be used.

In some embodiments, the spent catalyst fluid comprises 1 to 20 weight percent of the non-hydrolyzable triorganophosphorous compound following step (b) (prior to storing the fluid or prior to shipping for precious metal recovery). In such embodiments, any concentration of the spent catalyst fluid has occurred during steps (a) and/or (b) but before storing the fluid shipping the fluid for precious metal recovery.

In some embodiments, the non-hydrolyzable triorganophosphorous compound is a triorganophosphine. The non-hydrolyzable triorganophosphorous compound is triphenylphosphine in some embodiments.

In some embodiments, the source of the non-hydrolyzable triorganophosphorous compound is a second spent catalyst fluid, wherein the second spent catalyst fluid comprises triorganophosphine. The second spent catalyst fluid can comprise free or uncomplexed triorganophosphine. For example, if a facility operates two hydroformylation reaction processes with one using a hydrolyzable organophopshorous ligand and the other using a non-hydrolyzable triorganophosphorous ligand, spent catalyst fluid comprising the non-hydrolyzable triorganophosphorous ligand can be added to the spent catalyst fluid comprising the hydrolyzable organophosphorous ligand prior to storing the fluid or prior to shipping for precious metal recovery. The source of the non-hydrolyzable triorganophosphorous compound is not critical for the present invention because it is likely to be incinerated or removed with the hydrolyzable triorganophosphorous compound at the precious metal recovery facility.

The hydroformylation reaction processes contemplated for providing spent catalyst fluid for use with the present invention utilize a catalyst that comprises a metal and a hydrolyzable organophosphorous ligand. Illustrative metal-organophosphorous ligand complexes employable in such hydroformylation reactions include metal-organophosphorous ligand complex catalysts. These catalysts, as well as methods for their preparation, are well known in the art and include those disclosed in the patents mentioned herein. In general, such catalysts may be preformed or formed in situ and comprise metal in complex combination with a hydrolyzable organophosphorous ligand, carbon monoxide and optionally hydrogen. The ligand complex species may be present in mononuclear, dinuclear and/or higher nuclearity forms. However, the exact structure of the catalyst is not known.

The metal-organophosphorous ligand complex catalyst can be optically active or non-optically active. The metals include Group 8 metals and optionally, Group 9 and 10 metals. The metals may be selected from rhodium (Rh), cobalt (Co), iridium (Ir), ruthenium (Ru), iron (Fe), nickel (Ni), palladium (Pd), platinum (Pt), osmium (Os) and mixtures thereof, with the preferred metals being rhodium, cobalt, iridium and ruthenium, more preferably rhodium, cobalt and ruthenium, especially rhodium. Mixtures of these metals may be used. The permissible organophosphorous ligands that make up the metal-organophosphorous ligand complexes and free organophosphorous ligand include mono-, di-, tri- and higher polyorganophosphorus ligands. Mixtures of ligands may be employed in the metal-organophosphorous ligand complex catalyst and/or free ligand, and such mixtures may be the same or different.

Among the hydrolyzable organophosphorous ligands that may serve as the ligand of the metal-organophosphorous ligand complex catalyst are monoorganophosphite, diorganophosphite, triorganophosphite and organopolyphosphite compounds. Such hydrolyzable organophosphorous ligands and methods for their preparation are well known in the art.

Representative monoorganophosphites may include those having the formula: 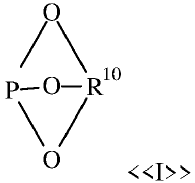 wherein R¹⁰ represents a substituted or unsubstituted trivalent hydrocarbon radical containing from 4 to 40 carbon atoms or greater, such as trivalent acyclic and trivalent cyclic radicals, e.g., trivalent alkylene radicals such as those derived from 1,2,2-trimethylolpropane and the like, or trivalent cycloalkylene radicals such as those derived from 1,3,5-trihydroxycyclohexane and the like. Such monoorganophosphites may be found described in greater detail, for example, in US 4,567,306.

Representative diorganophosphites may include those having the formula: 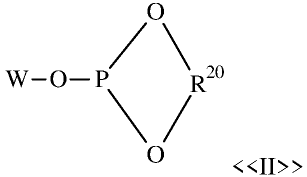 wherein R²⁰ represents a substituted or unsubstituted divalent hydrocarbon radical containing from 4 to 40 carbon atoms or greater and W represents a substituted or unsubstituted monovalent hydrocarbon radical containing from 1 to 18 carbon atoms or greater.

Representative substituted and unsubstituted monovalent hydrocarbon radicals represented by W in the above Formula (II) include alkyl and aryl radicals, while representative substituted and unsubstituted divalent hydrocarbon radicals represented by R²⁰ include divalent acyclic radicals and divalent aromatic radicals. Illustrative divalent acyclic radicals include, for example, alkylene, alkylene-oxy-alkylene, alkylene-S-alkylene, cycloalkylene radicals, and, alkylene-NR²⁴ -alkylene wherein R²⁴ is hydrogen or a substituted or unsubstituted monovalent hydrocarbon radical, e.g., an alkyl radical having 1 to 4 carbon atoms. The more preferred divalent acyclic radicals are the divalent alkylene radicals such as disclosed more fully, for example, in US Patents 3,415,906 and 4,567,302 and the like. Illustrative divalent aromatic radicals include, for example, arylene, bisarylene, arylene-alkylene, arylene-alkylene-arylene, arylene-oxy-arylene, arylene-NR²⁴ - arylene wherein R²⁴ is as defined above, arylene-S-arylene, arylene-S-alkylene and the like. More preferably R²⁰ is a divalent aromatic radical such as disclosed more fully, for example, in US Patents 4,599,206, 4,717,775, 4,835,299, and the like.

Representative of a more preferred class of diorganophosphites are those of the formula: 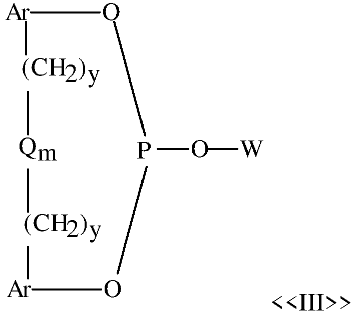 wherein W is as defined above, each Ar is the same or different and represents a substituted or unsubstituted aryl radical, each y is the same or different and is a value of 0 or 1, Q represents a divalent bridging group selected from -C(R³³)₂-, -O-, -S-, -NR²⁴-, Si(R³⁵)₂ and - CO-, wherein each R³³ is the same or different and represents hydrogen, an alkyl radical having from 1 to 12 carbon atoms, phenyl, tolyl, and anisyl, R²⁴ is as defined above, each R³⁵ is the same or different and represents hydrogen or a methyl radical, and m has a value of 0 or 1. Such diorganophosphites are described in greater detail, for example, in US Patents 4,599,206, 4,717,775, and 4,835,299.

Representative triorganophosphites may include those having the formula: 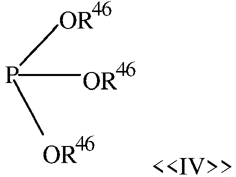 wherein each R⁴⁶ is the same or different and is a substituted or unsubstituted monovalent hydrocarbon radical e.g., an alkyl, cycloalkyl, aryl, alkaryl and aralkyl radicals that may contain from 1 to 24 carbon atoms. Illustrative triorganophosphites include, for example, trialkyl phosphites, dialkylaryl phosphites, alkyldiaryl phosphites, triaryl phosphites, and the like, such as, for example, trimethyl phosphite, triethyl phosphite, butyldiethyl phosphite, dimethylphenyl phosphite, triphenyl phosphite, trinaphthyl phosphite, bis(3,6,8-tri-t-butyl-2-naphthyl)methylphosphite, bis(3,6,8-tri-t-butyl-2-naphthyl)cyclohexylphosphite, tris(3,6-di-t-butyl-2-naphthyl)phosphite, bis(3,6,8-tri-t-butyl-2-naphthyl)phenylphosphite, and bis(3,6,8-tri-t-butyl-2-naphthyl)(4-sulfonylphenyl)phosphite, and the like. The most preferred triorganophosphite is triphenylphosphite. Such triorganophosphites are described in greater detail, for example, in US Patents 3,527,809 and 4,717,775.

Representative organopolyphosphites contain two or more tertiary (trivalent) phosphorus atoms and may include those having the formula: 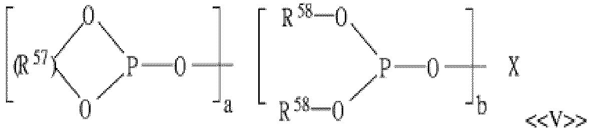 wherein X represents a substituted or unsubstituted n-valent organic bridging radical containing from 2 to 40 carbon atoms, each R⁵⁷ is the same or different and represents a divalent organic radical containing from 4 to 40 carbon atoms, each R⁵⁸ is the same or different and represents a substituted or unsubstituted monovalent hydrocarbon radical containing from 1 to 24 carbon atoms, a and b can be the same or different and each have a value of 0 to 6, with the proviso that the sum of a+b is 2 to 6 and n equals a+b. It is to be understood that when a has a value of 2 or more, each R⁵⁷ radical may be the same or different. Each R⁵⁸ radical may also be the same or different in any given compound.

Representative n-valent (preferably divalent) organic bridging radicals represented by X and representative divalent organic radicals represented by R⁵⁷ above, include both acyclic radicals and aromatic radicals, such as alkylene, alkylene-Qₘ-alkylene, cycloalkylene, arylene, bisarylene, arylene-alkylene, and arylene-(CH₂)_{y}-Qₘ-(CH₂)_{y}-arylene radicals, and the like, wherein each Q, y and m are as defined above in Formula (III). The more preferred acyclic radicals represented by X and R⁵⁷ above are divalent alkylene radicals, while the more preferred aromatic radicals represented by X and R⁵⁷ above are divalent arylene and bisarylene radicals, such as disclosed more fully, for example, in US Patents 4,769,498; 4,774,361: 4,885,401; 5,179,055; 5,113,022; 5,202,297; 5,235,113; 5,264,616; 5,364,950 and 5,527,950. Representative preferred monovalent hydrocarbon radicals represented by each R⁵⁸ radical above include alkyl and aromatic radicals.

Illustrative preferred organopolyphosphites may include bisphosphites such as those of Formulas (VI) to (VIII) below: 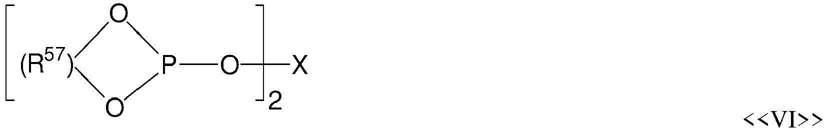 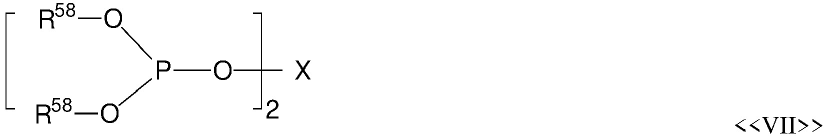 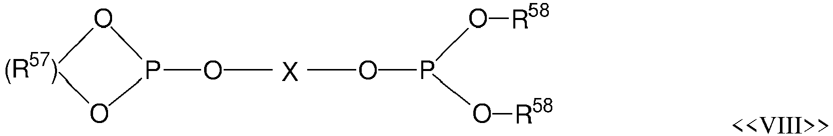 wherein each R⁵⁷, R⁵⁸ and X of Formulas (VI) to (VIII) are the same as defined above for Formula (V). Preferably each R⁵⁷ and X represents a divalent hydrocarbon radical selected from alkylene, arylene, arylene-alkylene-arylene, and bisarylene, while each R⁵⁸ radical represents a monovalent hydrocarbon radical selected from alkyl and aryl radicals. Organophosphite ligands of such Formulas (V) to (VIII) may be found disclosed, for example, in US Patents 4,668,651; 4,748,261; 4,769,498; 4,774,361; 4,885,401; 5,113,022; 5,179,055; 5,202,297; 5,235,113; 5,254,741; 5,264,616; 5,312,996; 5,364,950; and 5,391,801.

R¹⁰, R²⁰, R⁴⁶, R⁵⁷, R⁵⁸, Ar, Q, X, m, and y in Formulas (VI) to (VIII) are as defined above. Most preferably X represents a divalent aryl-(CH₂)_{y}-(Q)ₘ-(CH₂)_{y}-aryl radical wherein each y individually has a value of 0 or 1; m has a value of 0 or 1 and Q is -O-, -S- or -C(R³⁵)₂- where each R³⁵ is the same or different and represents hydrogen or a methyl radical. More preferably each alkyl radical of the above defined R⁵⁸ groups may contain from 1 to 24 carbon atoms and each aryl radical of the above-defined Ar, X, R⁵⁷ and R⁵⁸ groups of the above Formulas (VI) to (VIII) may contain from 6 to 18 carbon atoms and said radicals may be the same or different, while the preferred alkylene radicals of X may contain from 2 to 18 carbon atoms and the preferred alkylene radicals of R⁵⁷ may contain from 5 to 18 carbon atoms. In addition, preferably the divalent Ar radicals and divalent aryl radicals of X of the above formulas are phenylene radicals in which the bridging group represented by -(CH₂)_{y}-(Q)ₘ-(CH₂)_{y}- is bonded to said phenylene radicals in positions that are ortho to the oxygen atoms of the formulas that connect the phenylene radicals to their phosphorus atom of the formulae. It is also preferred that any substituent radical when present on such phenylene radicals be bonded in the para and/or ortho position of the phenylene radicals in relation to the oxygen atom that bonds the given substituted phenylene radical to its phosphorus atom.

Any of the R¹⁰, R²⁰, R⁵⁷, R⁵⁸, W, X, Q and Ar radicals of such organophosphites of Formulas (I) to (VIII) above may be substituted if desired, with any suitable substituent containing from 1 to 30 carbon atoms that does not unduly adversely affect the desired result of the process of this invention. Substituents that may be on said radicals in addition to corresponding hydrocarbon radicals such as alkyl, aryl, aralkyl, alkaryl and cyclohexyl substituents, may include for example silyl radicals such as --Si(R³⁵)₃ ; amino radicals such as -N(R¹⁵)₂ ; phosphine radicals such as -aryl-P(R¹⁵)₂ ; acyl radicals such as -C(O)R¹⁵ acyloxy radicals such as -OC(O)R¹⁵ ; amido radicals such as --CON(R¹⁵)₂ and - N(R¹⁵)COR¹⁵ ; sulfonyl radicals such as -SO₂ R¹⁵, alkoxy radicals such as -OR¹⁵ ; sulfinyl radicals such as -SOR¹⁵, phosphonyl radicals such as -P(O)(R¹⁵)₂, as well as halo, nitro, cyano, trifluoromethyl, hydroxy radicals and the like, wherein each R¹⁵ radical individually represents the same or different monovalent hydrocarbon radical having from 1 to 18 carbon atoms (e.g., alkyl, aryl, aralkyl, alkaryl and cyclohexyl radicals), with the proviso that in amino substituents such as -N(R¹⁵)₂ each R¹⁵ taken together can also represent a divalent bridging group that forms a heterocyclic radical with the nitrogen atom, and in amido substituents such as -C(O)N(R¹⁵)₂ and -N(R¹⁵)COR¹⁵ each R¹⁵ bonded to N can also be hydrogen. It is to be understood that any of the substituted or unsubstituted hydrocarbon radicals groups that make up a particular given organophosphite may be the same or different.

More specifically illustrative substituents include primary, secondary and tertiary alkyl radicals such as methyl, ethyl, n-propyl, isopropyl, butyl, sec-butyl, t-butyl, neopentyl, n-hexyl, amyl, sec-amyl, t-amyl, iso-octyl, decyl, octadecyl, and the like; aryl radicals such as phenyl, naphthyl, and the like; aralkyl radicals such as benzyl, phenylethyl, triphenylmethyl, and the like; alkaryl radicals such as tolyl, xylyl, and the like; alicyclic radicals such as cyclopentyl, cyclohexyl, 1-methylcyclohexyl, cyclooctyl, cyclohexylethyl, and the like; alkoxy radicals such as methoxy, ethoxy, propoxy, t-butoxy, -OCH₂CH₂OCH₃, -O(CH₂ CH₂) ₂OCH₃, -O(CH₂CH₂)₃OCH₃, and the like; aryloxy radicals such as phenoxy and the like; as well as silyl radicals such as -Si(CH₃)₃, -Si(OCH₃)₃, -Si(C₃H₇)₃, and the like; amino radicals such as -NH₂, -N(CH₃)₂, -NHCH₃, -NH(C₂H₅), and the like; arylphosphine radicals such as -P(C₆H₅)₂, and the like; acyl radicals such as -C(O)CH₃, -C(O)C₂H₅, - C(O)C₆H₅, and the like; carbonyloxy radicals such as -C(O)OCH₃, and the like; oxycarbonyl radicals such as -O(CO)C₆H₅ and the like; amido radicals such as -CONH₂, - CON(CH₃)₂, -NHC(O)CH₃, and the like; sulfonyl radicals such as -S(O)₂C₂H₅ and the like; sulfinyl radicals such as -S(O)CH₃ and the like; sulfidyl radicals such as -SCH₃, -SC₂H₅, - SC₆H₅, and the like; phosphonyl radicals such as -P(O)(C₆H₅)₂, -P(O)(CH₃)₂, -P(O)(C₂H₅)₂, -P(O)(C₃H₇)₂, -P(O)(C₄H₉)₂, -P(O)(C₆H₁₃)₂, -P(O)CH₃(C₆H₅), -P(O)(H)(C₆H₅), and the like.

Specific illustrative examples of such organophosphite ligands include the following: 2-t-butyl-4-methoxyphenyl( 3,3'-di-t-butyl-5,5'-dimethoxy-1,1'-biphenyl-2,2'-diyl)phosphite, methyl(3,3'-di-t-butyl-5,5'-dimethoxy-1,1'-biphenyl-2,2'-diyl)phosphite, 6,6'-[[3,3'-bis(1,1-dimethylethyl)-5,5'-dimethoxy-[1,1'-biphenyl]-2,2'-diy 1 ]bis(oxy)]bis-dibenzo[d,f][1,3,2]dioxaphosphepin, 6,6'-[[3,3',5,5'-tetrakis(1,1-dimethylethyl)-1,1'-biphenyl]-2,2'-diyl]bis( o xy)]bis-dibenzo[d,f][1,3,2]-dioxaphosphepin, (2R,4R) - di[2,2'-(3,3', 5,5'-tetrakis-tert-butyl-1,1-biphenyl)]-2,4-pentyldiphosphite, (2R, 4R)di[2,2'-(3,3'-di-tert-butyl-5,5'-dimethoxy-1,1'-biphenyl)]-2,4-pentyldi phosphite, 2-[[2-[[4,8,-bis(1,1-dimethylethyl), 2,10-dimethoxydibenzo-[d,f] [1,3,2]dioxophosphepin-6-yl]oxy ]-3-(1,1-dimethylethyl)-5-methoxyphenyl]methyl]-4-methoxy, methylenedi-2,1-phenylene tetrakis[2,4-bis(1,1-dimethylethyl)phenyl]ester of phosphorous acid, and [1,1'-biphenyl]-2,2'-diyl tetrakis[2-(1,1-dimethylethyl)-4-methoxyphenyl]ester of phosphorous acid.

A metal-organophosphorus ligand complex catalyst advantageously comprises the metal complexed with carbon monoxide and a hydrolyzable organophosphorous ligand, said ligand being bonded (complexed) to the metal in a chelated and/or non-chelated fashion. Mixtures of catalysts can be employed. The amount of metal-organophosphorous ligand complex catalyst present in the reaction fluid need only be that minimum amount necessary to provide the given metal concentration desired to be employed and that will furnish the basis for at least the catalytic amount of metal necessary to catalyze the particular hydroformylation process involved such as disclosed, for example, in the above-mentioned patents. In general, catalytic metal, e.g., rhodium, concentrations in the range of from 10 ppmw to 1000 ppmw, calculated as free metal in the reaction medium, should be sufficient for most processes, while it is generally preferred to employ from 10 to 500 ppmw of metal, and more preferably from 25 to 350 ppmw of metal. Of course, if the spent catalyst fluid is concentrated prior to being sent to a precious metal recovery facility, the metal concentrations in the spent catalyst fluid may be much higher.

In addition to the metal-organophosphorous ligand complex catalyst, free hydrolyzable organophosphorous ligand (i.e., ligand that is not complexed with the metal) may also be present in the reaction medium. The free hydrolyzable organophosphorous ligand may correspond to any of the above-defined hydrolyzable organophosphorous ligands discussed above. It is preferred that the free hydrolyzable organophosphorous ligand be the same as the hydrolyzable organophosphorous ligand of the metal-organophosphorous ligand complex catalyst employed. However, such ligands need not be the same in any given process. The hydroformylation process of this invention may involve from 0.1 moles or less to 100 moles or higher of free hydrolyzable organophosphorous ligand per mole of metal in the reaction medium. Preferably, the hydroformylation process is carried out in the presence of from 1 to 50 moles of hydrolyzable organophosphorous ligand per mole of metal present in the reaction medium. More preferably, for organopolyphosphites, from 1.1 to 4 moles of organopolyphosphite ligand are employed per mole of metal. Said amounts of hydrolyzable organophosphorous ligand are the sum of both the amount of organophosphorous ligand that is bound (complexed) to the metal present and the amount of free organophosphorous ligand present. If desired, additional hydrolyzable organophosphorous ligand can be supplied to the reaction medium of the hydroformylation process at any time and in any suitable manner, e.g. to maintain a predetermined level of free ligand in the reaction medium.

In embodiments where the hydrolyzable organophosphorous ligand is an organophosphite ligand, the use of an aqueous buffer solution, such as in an extraction system, to prevent and/or lessen hydrolytic degradation of an organophosphite ligand and deactivation of a metal-organophosphite ligand complex is well-known and isdisclosed, e.g., in US 5,741,942 and US 5,741,944. Such buffer systems and/or methods for their preparation are well known in the art. Mixtures of buffers may be employed.

Illustrative metal-organophosphorous ligand complex catalyzed hydroformylation processes that may experience hydrolytic degradation include those processes as described, for example, in US Patents 4,148,830; 4,593,127; 4,769,498; 4,717,775; 4,774,361; 4,885,401; 5,264,616; 5,288,918; 5,360,938; 5,364,950; 5,491,266 and 7,196,230. Species containing the P-Z moiety that will likely undergo hydrolytic degradation include organophosphonites, phosphoramidites, and fluorophosphonites such as described WO 2008/071508, WO 2005/042458, and US Patents 5,710,344, 6,265,620, 6,440,891, 7,009,068, 7,145,042, 7,586,010, 7,674,937, and 7,872,156. These species will generate a variety of acidic and/or polar degradation products that can be extracted by use of the extractor technology taught in US Patents 5,744,649 and 5,741,944. Accordingly, the hydroformylation processing techniques that are advantageously employed may correspond to any known processing techniques such as, for example, gas recycle, liquid recycle, and combinations thereof. Preferred hydroformylation processes are those involving catalyst liquid recycle.

Optionally, an organic nitrogen compound may be added to the hydroformylation reaction fluid to scavenge the acidic hydrolysis by-products formed upon hydrolysis of the hydrolyzable organophosphorous ligand, as taught, for example, in US 4, 567, 306. Such organic nitrogen compounds may be used to react with and to neutralize the acidic compounds by forming conversion product salts therewith, thereby preventing the catalytic metal from complexing with the acidic hydrolysis by-products and thus helping to protect the activity of the catalyst while it is present in the reaction zone under reaction conditions. However, despite the use of these amine additives, the catalyst activity may still ultimately decline due to other factors such as catalyst poisons and heavies buildup.

The reaction conditions of the hydroformylation reaction process are well known and may include any suitable type hydroformylation conditions heretofore employed for producing optically active and/or non-optically active aldehydes. The hydroformylation reaction conditions employed will be governed by the type of aldehyde product desired. For instance, the total gas pressure of hydrogen, carbon monoxide and olefin starting compound of the hydroformylation process may range from 1 to 69,000 kPa. In general, however, it is preferred that the process be operated at a total gas pressure of hydrogen, carbon monoxide and olefin starting compound of less than 14,000 kPa and more preferably less than 3,400 kPa. The minimum total pressure is limited predominantly by the amount of reactants necessary to obtain a desired rate of reaction. More specifically, the carbon monoxide partial pressure of the hydroformylation process is preferably from 1 to 6,900 kPa, and more preferably from 21 to 5,500 kPa, while the hydrogen partial pressure is preferably from 34 to 3,400 kPa and more preferably from 69 to 2,100 kPa. In general, the molar ratio of gaseous H₂:CO may range from 1: 10 to 100:1 or higher, the more preferred molar ratio being from 1: 10 to 10: 1.

In general, the hydroformylation process may be conducted at any operable reaction temperature. Advantageously, the hydroformylation process is conducted at a reaction temperature from -25 °C to 200 °C, preferably from 50 °C to 120 °C.

The hydroformylation process may be carried out using one or more suitable reactors such as, for example, a fixed bed reactor, a fluid bed reactor, a continuous stirred tank reactor (CSTR) or a slurry reactor. The optimum size and shape of the reactor will depend on the type of reactor used. The reaction zone employed may be a single vessel or may comprise two or more discrete vessels. The separation zone employed may be a single vessel or may comprise two or more discrete vessels. The buffer treatment zone employed in this invention may be a single vessel or may comprise two or more discreet vessels. The reaction zone(s) and separation zone(s) employed herein may exist in the same vessel or in different vessels. For example, reactive separation techniques such as reactive distillation, reactive membrane separation, and the like, may occur in the reaction zone(s).

The particular hydroformylation process for producing aldehydes from an olefinic unsaturated compound, as well as the reaction conditions and ingredients of the hydroformylation process are not critical features of this invention. The process can be practiced on any spent catalyst fluid from a hydroformylation process where the catalyst comprises a Group 8 transition metal and a hydrolyzable organophosphorous ligand is substantially free of non-hydrolyzable triorganophosphorous compounds.

It is generally preferred to carry out the hydroformylation process in a continuous manner. Continuous hydroformylation processes are well known in the art. The continuous process can be carried out in a single pass mode, i.e., wherein a vaporous mixture comprising unreacted olefinic starting material(s) and vaporized aldehyde product is removed from the liquid reaction mixture from whence the aldehyde product is recovered and make-up olefinic starting material(s), carbon monoxide and hydrogen are supplied to the liquid reaction medium for the next single pass through without recycling the unreacted olefinic starting material(s). Such types of recycle procedure are well known in the art and may involve the liquid recycling of the metal-organophosphorous complex catalyst fluid separated from the desired aldehyde reaction product(s), such as disclosed, for example, in US 4,148,830 or a gas recycle procedure such as disclosed, for example, in US 4,247,486, as well as a combination of both a liquid and gas recycle procedure if desired. The most preferred hydroformylation process comprises a continuous liquid catalyst recycle process. Suitable liquid catalyst recycle procedures are disclosed, for example, in US Patents 4,668,651; 4,774,361; 5,102,505 and 5,110,990.

As indicated above, desired aldehydes may be recovered from the reaction mixtures. For example, the recovery techniques disclosed in US Patents 4,148,830 and 4,247,486 can be used. For instance, in a continuous liquid catalyst recycle process the portion of the liquid reaction mixture (containing aldehyde product, catalyst, etc.), i.e., reaction fluid, removed from the reaction zone can be passed to a separation zone, e.g., vaporizer/separator, wherein the desired aldehyde product can be separated via distillation, in one or more stages, under normal, reduced or elevated pressure, from the liquid reaction fluid, condensed and collected in a product receiver, and further purified if desired. The remaining non-volatilized catalyst containing liquid reaction mixture may then be recycled back to the reactor as may if desired any other volatile materials, e.g., unreacted olefin, together with any hydrogen and carbon monoxide dissolved in the liquid reaction after separation thereof from the condensed aldehyde product, e.g., by distillation in any conventional manner. In general, it is preferred to separate the desired aldehydes from the catalyst-containing reaction mixture under reduced pressure and at low temperatures so as to avoid possible degradation of the organophosphorous ligand and reaction products.

Illustrative non-optically active aldehyde products include e.g., propionaldehyde, n-butyraldehyde, isobutyraldehyde, n-valeraldehyde, 2-methyl 1-butyraldehyde, hexanal, hydroxyhexanal, 2-methyl 1-heptanal, nonanal, 2-methyl-1-octanal, decanal, adipaldehyde, 2-methylglutaraldehyde, 2-methyladipaldehyde, 3-hydroxypropionaldehyde, 6-hydroxyhexanal, alkenals, e.g., 2-, 3- and 4-pentenal, alkyl 5-formylvalerate, 2-methyl-1-nonanal, 2-methyl 1-decanal, 3-propyl-1-undecanal, pentadecanal, 3-propyl-1-hexadecanal, eicosanal, 2-methyl-1-tricosanal, pentacosanal, 2-methyl-1-tetracosanal, nonacosanal, 2-methyl-1-octacosanal, hentriacontanal, 2-methyl-1-triacontanal, and the like.

Illustrative optically active aldehyde products include (enantiomeric) aldehyde compounds prepared by the asymmetric hydroformylation process of this invention such as, e.g. S-2-(p-isobutylphenyl)-propionaldehyde, S-2-(6-methoxy-2-naphthyl)propionaldehyde, S-2-(3-benzoylphenyl)-propionaldehyde, S-2-(3-fluoro-4-phenyl)phenylpropionaldehyde, and S-2-(2-methylacetaldehyde)-5-benzoylthiophene.

Catalyst activity is a function of a number of process variables such as temperature, rhodium concentration, raw material concentrations (e.g., syngas and olefin), and the like. However, there are limits to the extent that these variables can be used to maintain a constant commercially viable reaction rate. For example, elevated temperatures result in higher heavies formation and higher pressures may require expensive equipment upgrades. Additional rhodium can be added to increase the catalyst concentration but this can become expensive when a large portion of the precious metal is inactive and thus consistutes wasted capital. In addition, it appears that once deactivated metal is present, the rate of catalyst deactivation increases as if the colloidal metal acts as "seeds" for additional colloidal growth. Thus, at some point, the catalyst solution activity becomes insufficient for economic production such that a purge stream or an entire spent catalyst fluid needs to be sent for precious metal recovery.

The activity of hydroformylation catalysts, as quantified using reaction rate, is typically measured as the number of moles of product (aldehyde) per volume of catalyst solution per unit of time (generally scaled by the concentration of active metal) with units of gmols of aldehyde/L/hr/ppm Rh, for example. Other conventional measurements are in units of "turn-over number" or TON (units of hr⁻¹), which is moles of aldehyde produced per moles of active catalyst. The moles of active catalyst are typically determined by measuring the amount of rhodium in ppm using Atomic Absorption or Inductively Coupled Plasma analysis) and comparison to the activity (reaction rate) of a fresh catalyst solution to calculate a "% Active" value.

When the activity of hydroformylation catalyst becomes insufficient, a portion of or the entire spent catalyst fluid is removed from the hydroformylation system to be sent to a precious metal recovery process either on-site or more commonly off-site to a specialized precious metal recovery company. The spent catalyst fluid is preferably removed after the product/catalyst separation process in order to recover as much aldehyde product as possible. The remaining spent catalyst fluid can then be stored in a tank or vessel, in some embodiments, until sufficient quantity has been obtained for economic transportation to the precious metal recovery facility.

Surprisingly, it has been found that adding additional non-hydrolyzable triorganophosphorous compounds to the spent catalyst fluid after it has been removed from the hydroformylation system can prevent precipitation of the precious metal from the solution. In some cases, the addition of non-hydrolyzable triorganophsphorous compounds has been found to re-dissolve precipitated materials even at low levels in the spent catalyst fluid. These non-hydrolyzable triorganophosphorous compounds are ideally inexpensive non-hazardous materials that will not interfere with the conventional precious metal recovery process. In some embodiments, triarylphosphines have been found to be particularly useful in stabilizing the catalyst metal in the spent catalyst fluid (e.g., keeping the catalytic metal and associated compounds in solution).

In some embodiments, the non-hydrolyzable organophosphorous ligands comprise trialkylphosphines, dialkylarylphosphines, and aryldialkylphosphosphines wherein the alkyl moieties are C1-C20 hydrocarbons and/or C6-C20 cyclic hydrocarbons, and mixtures thereof.

In some embodiments, the non-hydrolyzable triorganophosphorous compounds used are triarylphosphines. Triarylphosphines that can be used in some embodiments of the present invention comprise any organic compound comprising one phosphorus (III) atom covalently bonded to three aryl or arylalkyl radicals, or combinations thereof. A mixture of triarylphosphine ligands may also be used in some embodiments. Representative non-hydrolyzable organomonophosphines include those having the following formula (Formula IX): 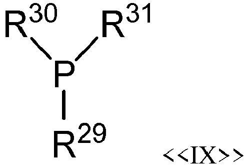 wherein each R²⁹, R³⁰ and R³¹ may be the same or different and represent a substituted or unsubstituted aryl radical containing from 4 to 40 carbon atoms or greater. Such triarylphosphines may be found and described in greater detail, for example, in US Patent No. 3,527,809. Illustrative triarylphosphine ligands include triphenylphosphine, trinaphthylphine, tritolylphosphine, tri(p-biphenyl)phosphine, tri(p-methoxyphenyl) phosphine, tri(m-chlorophenyl)-phosphine, p-N,N-dimethylaminophenyl bis-phenyl phosphine, and the like. Triphenylphosphine, i.e. the above compound of Formula IX wherein each R²⁹, R³⁰ and R³¹ is phenyl, is one particularly suitable organomonophosphine ligand that can be used as the non-hydrolyzable triorganophosphorous compound in embodiments of the present invention.

The process of the invention involves hydroformylation reaction catalysts that comprise a Group 8 transition metal and a hydrolyzable organophosphorous ligand, but is substantially free of non-hydrolyzable triorganophosphorous compounds. The process can prepare the spent catalyst fluid comprising the catalysts for precious metal recovery of the Group 8 transition metal. A spent catalyst fluid (e.g., a reaction fluid) is removed from the hydroformylation process. The spent catalyst fluid is concentrated to recover valuable aldehyde (e.g., to be sold) in some embodiments.

The non-hydrolyzable triorganophosphorous compound (e.g., triphenylphosphine) is then added to the spent catalyst fluid prior to storing the fluid or prior to shipping for precious metal recovery.

In one embodiment, the non-hydrolyazable triorganophosphorous compound to be added is part of a spent phosphine-based hydroformylation process. In another embodiment, the non-hydrolyazable triorganophosphorous compound is added prior to the concentration of the spent catalyst fluid in a distillation system outside of the hydroformylation reaction process. In another embodiment, the non-hydrolyazable triorganophosphorous compound is added to the vessel first and then the vessel is inerted prior to the addition of the spent catalyst fluid. In another embodiment, when the entire system catalyst charge is being sent off to precious metal recovery, the non-hydrolyazable triorganophosphorous compound is added to the hydroformylation reactor once the hydroformylation process is completed (e.g., olefin feed has terminated and will not be restarted with this catalyst charge). The existing product/catalyst separation zone (e.g., vaporizer) can then be used to further concentrate the solution if desired prior to discharging to storage and/or shipment to the precious metal recovery operation.

The amount of non-hydrolyazable triorganophosphorous compound ranges from 0.1 to 20 weight percent of the spent catalyst fluid based on the total weight of the spent catalyst fluid. In some embodiments, the amount of non-hydrolyazable triorganophosphorous compound ranges from 1 to 10 weight percent of the spent catalyst fluid based on the total weight of the spent catalyst fluid. In some embodiments, the amount of non-hydrolyazable triorganophosphorous compound ranges from 2 to 6 weight percent of the spent catalyst fluid based on the total weight of the spent catalyst fluid. The amount of non-hydrolyzable triorganophosphorous ligand can depend on a number of factors including, without limitation, the rhodium concentration and extent of prior deactivation. While modest heating after addition of the triorganophosphorous ligand may be desirable to insure completely dissolving and dispersing the non-hydrolyazable triorganophosphorous compound, it is not necessary in some embodiments. Because precious metal recovery facilities are accustomed to phosphine-based hydroformylation catalysts containing well over 20 weight percent phosphines (e.g., from processes where triphenylphosphine is used as the ligand in the hydroformylation reaction catalyst), the amount of non-hydrolyazable triorganophosphorous compound added according to embodiments of the present invention will not be significantly different from that to which they are accustomed.

The resulting mixture of hydrolyzable organophosphorous ligand-based precious metal catalyst and non-hydrolyazable triorganophosphorous compound can be stored and/or transported to the precious metal recovery facility as needed. The amount of precious metal deposition will be substantially reduced or eliminated and thus greatly facilitate the precious metal recovery process.

Some embodiments of the invention will now be described in detail in the following Examples.

### EXAMPLES

All parts and percentages in the following examples are by weight unless otherwise indicated. Pressures are given as absolute pressure unless otherwise indicated.

### EXAMPLE 1

A spent catalyst fluid from a butene hydroformylation system employing a bisphosphite ligand comprising rhodium and nickel metals exhibited substantial metal-ligand precipitates after many months of operation particularly in the vaporizer tails stream. A variety of high molecular weight additives are tested in an effort to solubilize the precipitates in such a spent catalyst fluid sample. The catalyst solution is mixed with the amount of additive shown in Table 1 and heated to 50°C. The results are shown in Table 1. Triphenylphosphine (TPP), exhibits the best performance at the lowest levels. Surprisingly, similar phosphites which are outside the scope of the currently claimed invention are ineffective and other additives with phenyl moieties required much higher levels to achieve the same effect.

**Table 1**

| Additive | Wt% | Solids Dissolved? |
|---|---|---|
| Benzyl Ether* | 20 | Yes |
| Ethyl Oleate* | 50 | No |
| Isopropyl Palmitate* | 50 | No |
| Triphenylphosphine | 5 | Yes |
| Triphenylphosphite* | 10 | No |
| Triisodecyl phosphite* | 10 | No |
| Tris (2,4-di-t-butylphenyl) phosphite* | 10 | No |

| | | |
|---|---|---|
| * Outside the scope of the currently claimed invention. | | |

### EXAMPLE 2

The TPP and the benzyl ether samples from Example 1 are further evaluated for further concentration. Residual valeraldehyde in the spent catalyst fluid is removed under vacuum (40mm Hg) at 50°C to model additional concentration to recover aldehyde product. The resulting materials are assessed relative to precipitation. After cooling to ambient temperature, both samples appear clear but after 48 hours at ambient temperature, the benzyl ether material (2a) exhibits precipitation upon standing whereas no precipitation is observed for the TPP-containing solution (2b). The composition of the resulting materials is given in Table 2. In the absence of aldehyde, which is a good solvent, the tendency for precipitation is greater yet TPP is still able to maintain a soluble composition. ³¹P NMR analysis of the TPP solution did not show any new metal-TPP complexes.

**Table 2**

| | | Concentration (wt%) | | |
|---|---|---|---|---|
| Species | | Original vaporizer tails solution | Benzyl Ether Additive (2a)** | TPP Additive (2b) |
| | Valeraldehyde* | 42 | BDL | BDL |
| | Ligand degradation products* | 3.5 | 5 | 4.5 |
| | Aldehyde trimers* | 33 | 42 | 70 |
| | Aldehyde "heavies"* | 13 | 41 | 15 |
| Visible solids | | No | Yes (after 48hrs) | No (after 48hrs) |

| | | | | |
|---|---|---|---|---|
| *GC analysis (BDL = Below Detection Limit); ** outside the scope of the currently claimed invention. | | | | |

## Claims

1. A process to prepare a spent catalyst fluid comprising a hydroformylation reaction catalyst comprising a Group 8 transition metal and a hydrolyzable organophosphorous ligand for precious metal recovery of the Group 8 transition metal, wherein the process minimizes or eliminates the formation of precipitates incorporating a precious metal, the process comprising:
(a) removing a spent catalyst fluid from an active hydroformylation reaction system, wherein the spent catalyst fluid comprises the hydroformylation reaction catalyst and is substantially free of non-hydrolyzable triorganophosphorous compounds, wherein the term "substantially free of non-hydrolyzable triorganophosphorous compounds" means that non-hydrolyzable triorganophosphorous compounds are not used as ligands for the Group 8 transition metal to form the hydroformylation catalyst and to the extent any such non-hydrolyzable organophosphorous compounds are present in the spent catalyst fluid, such compounds are present in an amount of less than 0.1 moles of non-hydrolyzable triorganophosphorous compound per mole of Group 8 transition metal; and
(b) adding a non-hydrolyzable triorganophosphorous compound to the spent catalyst fluid from step (a) prior to storing the fluid or prior to shipping for precious metal recovery,
wherein the non-hydrolyzable triorganophosphorous compound is added to the spent catalyst fluid prior to the spent catalyst fluid being concentrated to recover aldehyde product,
wherein hydrolyzable phosphorous ligands are trivalent phosphorous P^{(III)} ligands that contain at least one P-Z bond, wherein Z is oxygen, nitrogen, chlorine, fluorine or bromine,
wherein non-hydrolyzable phosphorous ligands are triorganophosphorous P^{(III)} ligands that do not include a P-H or a P-Z bond, wherein Z is oxygen, nitrogen, chlorine, fluorine or bromine.

2. The process of any of the preceding claims, wherein the spent catalyst fluid comprises 1 to 20 weight percent of the non-hydrolyzable triorganophosphorous compound following step (b).

3. The process any of the preceding claims, wherein the non-hydrolyzable triorganophosphorous compound is a triorganophosphine.

4. The process of any of the preceding claims, wherein the non-hydrolyzable triorganophosphorous compound is triphenylphosphine.

5. The process of any of the preceding claims, wherein the source of the non-hydrolyzable triorganophosphorous compound is a second spent catalyst fluid, wherein the second spent catalyst fluid comprises triorganophosphine.

## Patentansprüche

1. Verfahren, um ein verbrauchtes Katalysatorfluid, umfassend einen Hydroformylierungsreaktionskatalysator, umfassend ein Übergangsmetall der Gruppe 8 und einen hydrolysierbaren Organophosphorliganden für eine Edelmetallrückgewinnung des Übergangsmetalls der Gruppe 8, herzustellen, wobei das Verfahren die Bildung von Ausfällungen, die ein Edelmetall beinhalten, minimiert oder eliminiert, das Verfahren umfassend:
(a) Entfernen eines verbrauchten Katalysatorfluids aus einem aktiven Hydroformylierungsreaktionssystem, wobei das verbrauchte Katalysatorfluid den Hydroformylierungsreaktionskatalysator umfasst und im Wesentlichen frei von nicht hydrolysierbaren Triorganophosphorverbindungen ist, wobei der Begriff "im Wesentlichen frei von nicht hydrolysierbaren Triorganophosphorverbindungen" bedeutet, dass nicht hydrolysierbare Triorganophosphorverbindungen nicht als Liganden für das Übergangsmetall der Gruppe 8 verwendet werden, um den Hydroformylierungskatalysator zu bilden, und in dem Maße, in dem beliebige solche nicht hydrolysierbaren Organophosphorverbindungen in dem verbrauchten Katalysatorfluid vorhanden sind, solche Verbindungen in einer Menge von weniger als 0,1 Mol einer nicht hydrolysierbaren Triorganophosphorverbindung pro Mol des Übergangsmetalls der Gruppe 8 vorhanden sind; und
(b) Zugeben einer nicht hydrolysierbaren Triorganophosphorverbindung zu dem verbrauchten Katalysatorfluid aus Schritt (a) vor einem Lagern des Fluids oder vor einem Befördern für die Edelmetallrückgewinnung,
wobei die nicht hydrolysierbare Triorganophosphorverbindung dem verbrauchten Katalysatorfluid zugegeben wird, bevor das verbrauchte Katalysatorfluid konzentriert wird, um ein Aldehydprodukt zurückzugewinnen,
wobei hydrolysierbare Phosphorliganden dreiwertige Phosphor-P^{(III)}-Liganden sind, die mindestens eine P-Z-Bindung enthalten, wobei Z Sauerstoff, Stickstoff, Chlor, Fluor oder Brom ist,
wobei die nicht hydrolysierbaren Phosphorliganden Triorganophosphor-P^{(III)}-Liganden sind, die keine P-H- oder P-Z-Bindung einschließen, wobei Z Sauerstoff, Stickstoff, Chlor, Fluor oder Brom ist.

2. Verfahren nach einem der vorstehenden Ansprüche, wobei das verbrauchte Katalysatorfluid zu 1 bis 20 Gewichtsprozent die nicht hydrolysierbare Triorganophosphorverbindung nach Schritt (b) umfasst.

3. Verfahren nach einem der vorstehenden Ansprüche, wobei die nicht hydrolysierbare Triorganophosphorverbindung ein Triorganophosphin ist.

4. Verfahren nach einem der vorstehenden Ansprüche, wobei die nicht hydrolysierbare Triorganophosphorverbindung Triphenylphosphin ist.

5. Verfahren nach einem der vorstehenden Ansprüche, wobei die Quelle der nicht hydrolysierbaren Triorganophosphorverbindung ein zweites verbrauchtes Katalysatorfluid ist, wobei das zweite verbrauchte Katalysatorfluid Triorganophosphin umfasst.

## Revendications

1. Procédé de préparation d'un fluide catalytique usé comprenant un catalyseur de réaction d'hydroformylation comprenant un métal de transition du groupe 8 et un ligand organophosphoré hydrolysable pour la récupération du métal précieux du métal de transition du groupe 8, dans lequel le procédé minimise ou élimine la formation de précipités incorporant un métal précieux, le procédé comprenant :
(a) l'élimination d'un fluide catalytique usé d'un système actif de réaction d'hydroformylation, dans lequel le fluide catalytique usé comprend le catalyseur de réaction d'hydroformylation et est sensiblement exempt de composés triorganophosphorés non hydrolysables, dans lequel l'expression "substantiellement exempt de composés triorganophosphorés non hydrolysables" signifie que les composés triorganophosphorés non hydrolysables ne sont pas utilisés comme ligands du métal de transition du groupe 8 pour former le catalyseur d'hydroformylation et que, dans la mesure où de tels composés organophosphorés non hydrolysables sont présents dans le fluide catalytique usé, lesquels composés sont présents en quantité inférieure à 0,1 moles de composés triorganophosphorés non hydrolysables par mole de métal de transition du groupe 8 ; et
(b) l'ajout d'un composé triorganophosphoré non hydrolysable au fluide catalytique usé de l'étape (a) avant de stocker le fluide ou avant de l'expédier en vue de la récupération des métaux précieux,
dans lequel le composé triorganophosphoré non hydrolysable est ajouté au fluide catalytique usé avant que celui-ci ne soit concentré pour récupérer le produit aldéhyde,
dans lequel les ligands phosphorés hydrolysables sont des ligands phosphorés trivalents P^{(III)} qui contiennent au moins une liaison P-Z, dans lequel Z est l'oxygène, l'azote, le chlore, le fluor ou le brome,
dans lequel les ligands phosphorés non hydrolysables sont des ligands P^{(III)} triorganophosphorés qui ne comportent pas de liaison P-H ou P-Z, dans lequel Z est l'oxygène, l'azote, le chlore, le fluor ou le brome.

2. Procédé selon l'une quelconque des revendications précédentes, dans lequel le fluide catalytique usé comprend de 1 à 20 % en poids du composé triorganophosphoré non hydrolysable à la suite de l'étape (b).

3. Procédé selon l'une quelconque des revendications précédentes, dans lequel le composé triorganophosphoré non hydrolysable est une triorganophosphine.

4. Procédé selon l'une quelconque des revendications précédentes, dans lequel le composé triorganophosphoré non hydrolysable est la triphénylphosphine.

5. Procédé selon l'une quelconque des revendications précédentes, dans lequel la source du composé triorganophosphoré non hydrolysable est un second fluide de catalyseur usé, dans lequel le second fluide de catalyseur usé comprend de la triorganophosphine.
